# EUROPEAN PATENT APPLICATION

(11) **EP 4 534 967 A1**
(43) Date of publication of application: **09.04.2025**
(21) Application number: 23811839.2
(22) Date of filing: 24.05.2023
(51) Int. Cl.: G01L 5/00, B62M 3/00

(54) **PEDAL SHAFT**

(30) Priority: 25.05.2022 JP 2022085266
(71) Applicant: Minebea Mitsumi Inc., Kitasaku-gun, Nagano 3890293 (JP)
(72) Inventor: AOI, Hidekatsu, Kitasaku-gun, Nagano 389-0293 (JP); LI, Kui, Kitasaku-gun, Nagano 389-0293 (JP)
(74) Representative: Regimbeau
(86) International application number: PCT/JP2023/019294
(87) International publication number: WO 2023/228967

(57) **Abstract**

A pedal shaft (100) for a pedal-type power meter includes a hollow shaft (10) configured such that a pedal is rotatably attached to the hollow shaft (10), a strain gauge (SG_{X}, SSG) attached to an outer peripheral surface of the hollow shaft, and a processing circuit (20) disposed at an interior space of the hollow shaft and configured to process an output from the strain gauge.

## Description

### Technical Field

The present invention relates to a pedal shaft.

### Background Art

There is known a power meter attached to a bicycle or the like to measure a magnitude, a direction, and a position of a force of a user for depressing a pedal. The power meter is roughly classified into a pedal-type power meter including a measuring unit provided at a pedal, a crank-type power meter including a measuring unit provided at a crank, and a hub-type power meter including a measuring unit provided at a hub of a tire.

Patent Document 1 discloses the pedal-type power meter. In Patent Document 1, four elongation measuring pieces are attached to a pedal shaft.

### Citation List

### Patent Literature

Patent Document 1: JP H08-145824 A

### Summary of Invention

### Technical Problem

It is hard to say that the pedal shaft described in Patent Document 1 can detect a strain generated at the pedal shaft with sufficient accuracy.

An object of the present invention is to provide a pedal shaft for a pedal-type power meter, and the pedal shaft can detect a strain generated at the pedal shaft with high accuracy.

### Solution to Problem

According to one aspect of the present invention,
a pedal shaft for a pedal-type power meter is provided, the pedal shaft including
a hollow shaft configured such that a pedal is rotatably attached to the hollow shaft,
a strain gauge attached to an outer peripheral surface of the hollow shaft, and
a processing circuit disposed at an interior space of the hollow shaft and configured to process an output from the strain gauge.

### Advantageous Effects of Invention

A pedal shaft of the present invention can detect a strain generated at a pedal shaft with high accuracy.

### Brief Description of Drawings

FIG. 1 is a perspective view of a power meter according to an embodiment of the present invention.
FIG. 2 is a perspective view of a pedal shaft according to the embodiment of the present invention.
FIG. 3 is a cross-sectional view of the pedal shaft of FIG. 2 taken along a plane passing through a central axis X and extending in a radial direction. In FIG. 3, a strain gauge is not illustrated.
FIG. 4(a) is a cross-sectional view of a hollow shaft taken along line IVa-IVa in FIG. 3. FIG. 4(b) is a cross-sectional view of the hollow shaft taken along line IVb-IVb in FIG. 3. FIG. 4(c) is a cross-sectional view of the hollow shaft taken along line IVc-IVc in FIG. 3.

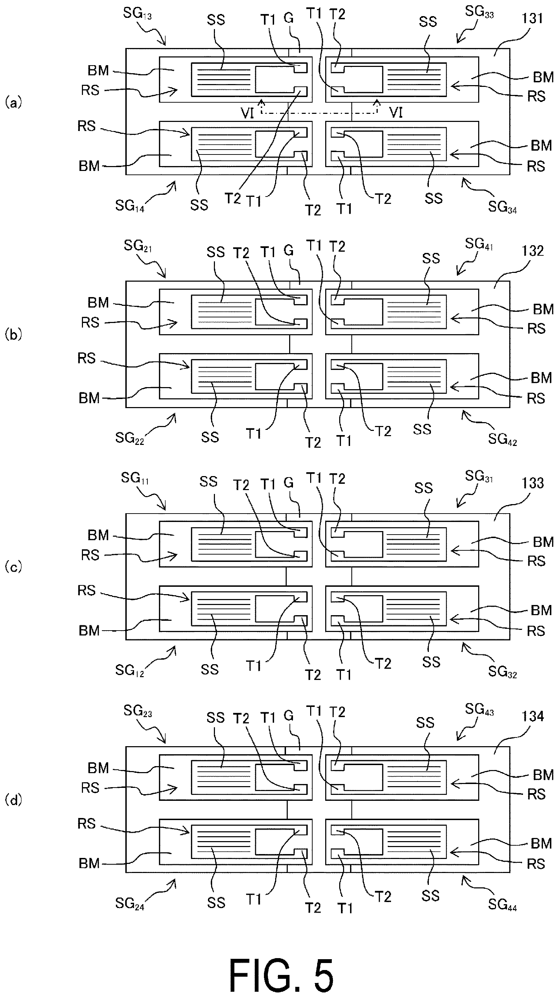

FIG. 5(a) is a plan view of a first strain generating surface viewed from the outside in the radial direction, illustrating configurations of four strain gauges attached to the first strain generating surface. FIG. 5(b) is a plan view of a second strain generating surface viewed from the outside in the radial direction, illustrating configurations of four strain gauges attached to the second strain generating surface. FIG. 5(c) is a plan view of a third strain generating surface viewed from the outside in the radial direction, illustrating configurations of four strain gauges attached to the third strain generating surface. FIG. 5(d) is a plan view of a fourth strain generating surface viewed from the outside in the radial direction, illustrating configurations of four strain gauges attached to the fourth strain generating surface. In each of FIGS. 5(a) to 5(d), a left side is a proximal end side, and a right side is a distal end side.
FIG. 6 is a cross-sectional view taken along line VI-VI in FIG. 5(a).
FIGS. 7(a) to 7(d) are each a circuit diagram of a Wheatstone bridge including strain gauges attached to the hollow shaft.
FIG. 8 is a plan view of a strain gauge included at a pedal shaft of a modification.

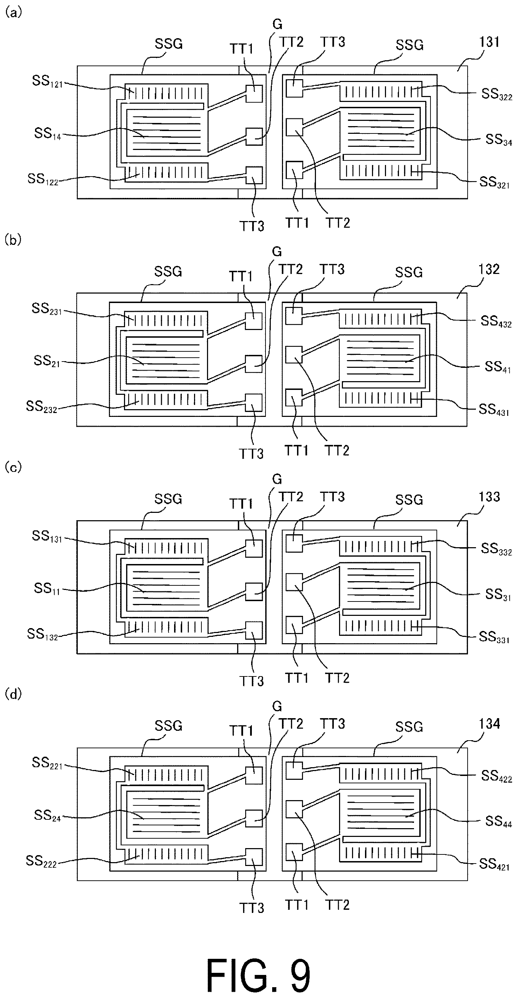

FIG. 9(a) is a plan view of the first strain generating surface viewed from the outside in the radial direction, illustrating a configuration of a strain gauge of the modification attached to the first strain generating surface. FIG. 9(b) is a plan view of the second strain generating surface viewed from the outside in the radial direction, illustrating a configuration of a strain gauge of the modification attached to the second strain generating surface. FIG. 9(c) is a plan view of the third strain generating surface viewed from the outside in the radial direction, illustrating a configuration of a strain gauge of the modification attached to the third strain generating surface. FIG. 9(d) is a plan view of the fourth strain generating surface viewed from the outside in the radial direction, illustrating a configuration of a strain gauge of the modification attached to the fourth strain generating surface.
FIGS. 10(a) to 10(d) are each a circuit diagram of a Wheatstone bridge including the strain gauges of the modification attached to the hollow shaft.

### Description of Embodiments

### Embodiments

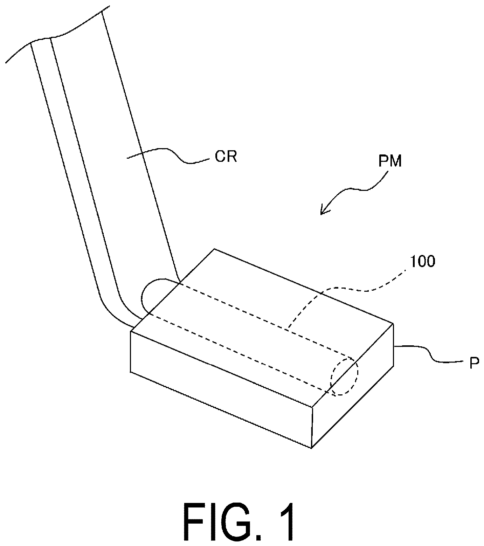

A pedal shaft 100 and a power meter PM according to an embodiment of the present invention will be described with reference to FIG. 1 to FIG. 7.

### Power Meter PM

As illustrated in FIG. 1, the power meter PM is a pedal-type power meter including the pedal shaft 100 and a pedal P rotatably attached to the pedal shaft 100.

### Pedal Shaft 100

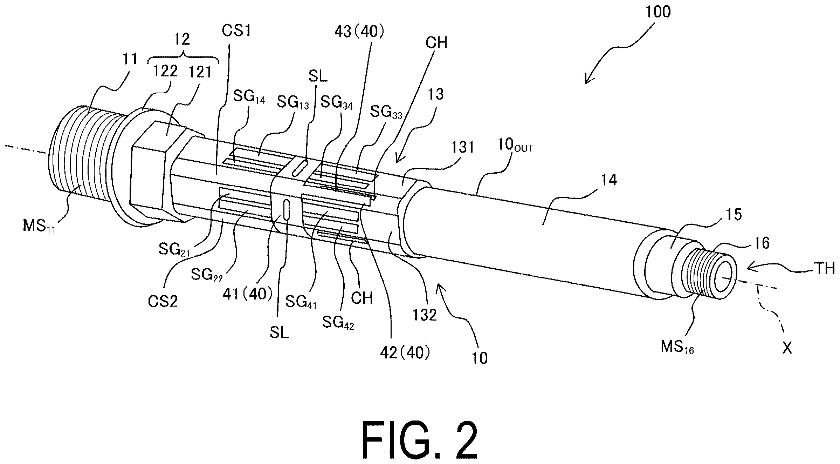

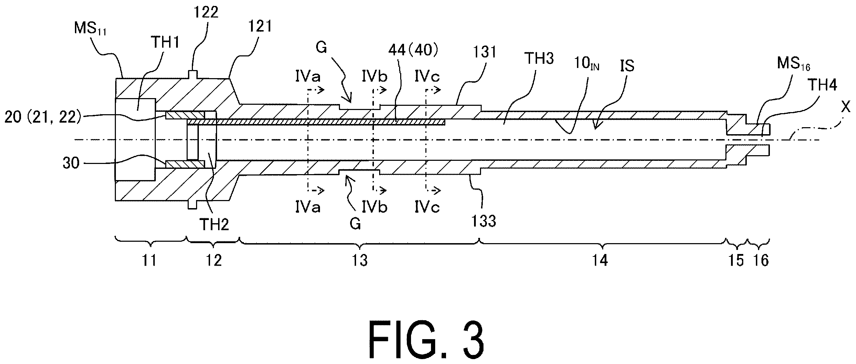

As illustrated in FIGS. 2 and 3, the pedal shaft 100 mainly includes a hollow shaft (hollow spindle) 10 having a central axis X, sixteen strain gauges (details will be described later) attached to an outer peripheral surface 10_{OUT} of the hollow shaft 10, and a circuit board 20 disposed at an interior space of the hollow shaft 10. The pedal shaft 100 further includes a power supply unit 30 disposed at the interior space of the hollow shaft 10 and a flexible printed circuit (FPC) 40 connecting the sixteen strain gauges to the circuit board 20.

In the following description, the direction of the central axis X is referred to as an axial direction of the hollow shaft 10 and the pedal shaft 100. Further, a radiation direction around the central axis X is referred to as a radial direction of the hollow shaft 10 and the pedal shaft 100, and a circumferential direction around the central axis X is referred to as a circumferential direction of the hollow shaft 10 and the pedal shaft 100.

In the axial direction, a crank screw part 11 (described later) side of the hollow shaft 10 is referred to as a proximal end side, and a pedal screw part 16 (described later) side of the hollow shaft 10 is referred to as a distal end side. In the circumferential direction, when the distal end side is viewed from the proximal end side in the axial direction, a clockwise direction is referred to as a positive direction, and a counterclockwise direction is referred to as a negative direction.

### Hollow Shaft 10

The hollow shaft 10 has a substantially cylindrical shape including a through hole TH extending in the axial direction. The hollow shaft 10 is formed of, as an example, a metal such as stainless steel.

The hollow shaft 10 is divided into the crank screw part 11, a bolt head part 12, a gauge attachment part 13, a medium diameter part 14, a small diameter part 15, and the pedal screw part 16 in this order from the proximal end side along the central axis X.

The crank screw part 11 is located at an end part of the hollow shaft 10 on the proximal end side. In the crank screw part 11, a male screw MS₁₁ is provided at the outer peripheral surface 10_{OUT} of the hollow shaft 10. The male screw MS₁₁ is used when the hollow shaft 10 is attached to a crank of a bicycle or the like.

The bolt head part 12 is provided adjacent to the crank screw part 11 and at a distal end side of the crank screw part 11 in the axial direction. In the bolt head part 12, a hexagonal bolt head 121 and a flange 122 are provided at the outer peripheral surface 10_{OUT} of the hollow shaft 10. The flange 122 is provided between the male screw MS₁₁ and the hexagonal bolt head 121. Instead of the hexagonal bolt head, a two sided or four sided bolt head may be provided.

The gauge attachment part 13 is provided adjacent to the bolt head part 12 and at the distal end side of the bolt head part 12 in the axial direction.

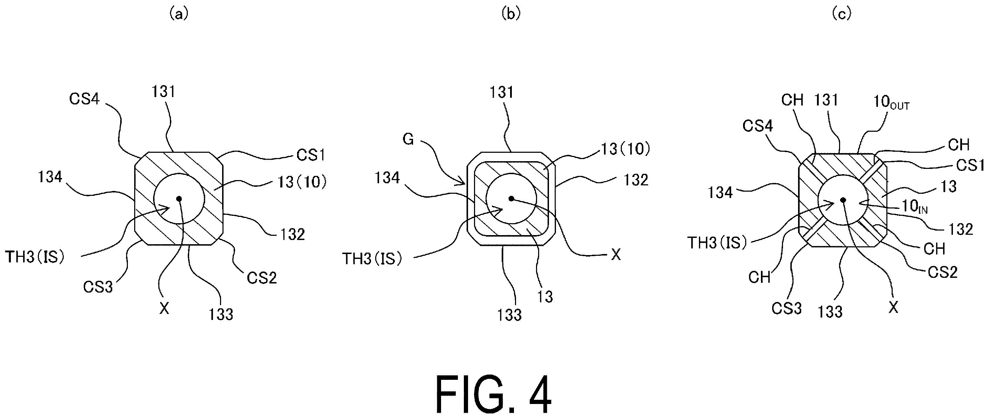

As illustrated in FIGS. 2 and 4(a), in the gauge attachment part 13, a first strain generating surface 131, a second strain generating surface 132, a third strain generating surface 133, and a fourth strain generating surface 134 each extending in a plane orthogonal to the radial direction of the hollow shaft 10 are provided at the outer peripheral surface 10_{OUT} of the hollow shaft 10. As illustrated in FIGS. 5(a) to 5(d), each of the first strain generating surface 131 to the fourth strain generating surface 134 is a rectangular flat surface with a long side direction aligned with the axial direction and a short side direction aligned with the circumferential direction. Each of the first strain generating surface 131 to the fourth strain generating surface 134 is a gauge attachment surface, and a strain gauge is attached to the gauge attachment surface.

As illustrated in FIG. 4(a), the first strain generating surface 131 and the third strain generating surface 133 are parallel to each other, and the second strain generating surface 132 and the fourth strain generating surface 134 are parallel to each other. The first strain generating surface 131 and the third strain generating surface 133 are orthogonal to the second strain generating surface 132 and the fourth strain generating surface 134.

A long side of the first strain generating surface 131 at a circumferential direction positive side and a long side of the second strain generating surface 132 at a circumferential direction negative side are connected to each other by a curved surface CS1 having an arc-shaped cross section. A long side of the second strain generating surface 132 at a circumferential direction positive side and a long side of the third strain generating surface 133 at a circumferential direction negative side are connected to each other by a curved surface CS2 having an arc-shaped cross section. A long side of the third strain generating surface 133 at a circumferential direction positive side and a long side of the fourth strain generating surface 134 at a circumferential direction negative side are connected to each other by a curved surface CS3 having an arc-shaped cross section. A long side of the fourth strain generating surface 134 at a circumferential direction positive side and a long side of the first strain generating surface 131 at a circumferential direction negative side are connected to each other by a curved surface CS4 having an arc-shaped cross section.

In other words, the outer peripheral surface of the hollow shaft 10 at the gauge attachment part 13 has a shape including four D-cut surfaces provided at a columnar surface (cylindrical surface) at equal intervals in the circumferential direction.

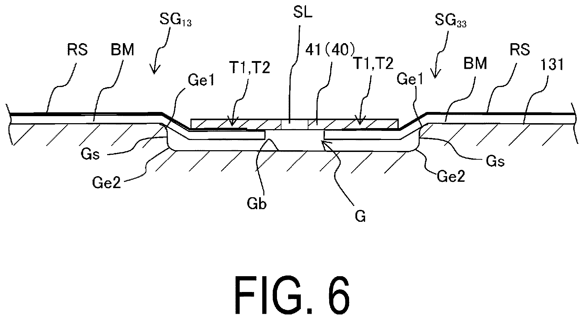

As illustrated in FIGS. 3 and 4(b), a recessed groove G extending over the entire region of the hollow shaft 10 in the circumferential direction is provided at a substantially central part of the gauge attachment part 13 in the axial direction. As illustrated in FIG. 6, an upper edge Ge1 (i.e., connection part between a side surface Gs and each of the first strain generating surface 131 to the fourth strain generating surface 134) and a lower edge Ge2 (i.e., connection part between the side surface Gs and a bottom surface Gb) of the recessed groove G are each subjected to R-chamfering. Thus, the upper edge Ge1 and the lower edge Ge2 of the recessed groove G have a curved cross-sectional shape taken along a plane orthogonal to the circumferential direction.

As illustrated in FIGS. 2 and 4(c), a connection hole CH extending in the radial direction of the hollow shaft 10 and connecting the outer peripheral surface 10_{OUT} with an inner peripheral surface 10_{IN} and an interior space IS is provided at a region of each of the curved surface CS1 to the curved surface CS4 at the distal end side with respect to the recessed groove G. In the present embodiment, each of four connection holes CH is a long hole (slot) with a longitudinal direction aligned with the axial direction. The FPC 40 is disposed at one of the four connection holes CH, and the FPC 40 is not disposed at the other three of the four connection holes CH (details will be described later).

The medium diameter part 14 is provided adjacent to the gauge attachment part 13 and at the distal end side of the gauge attachment part 13 in the axial direction. An outer diameter of the hollow shaft 10 at the medium diameter part 14 is smaller than an outer diameter (outer diameter passing through two facing surfaces of the curved surfaces CS1 to CS4) of the hollow shaft 10 at the gauge attachment part 13.

The small diameter part 15 is provided adjacent to the medium diameter part 14 and at the distal end side of the medium diameter part 14 in the axial direction. An outer diameter of the hollow shaft 10 at the small diameter part 15 is smaller than the outer diameter of the hollow shaft 10 at the medium diameter part 14.

The pedal screw part 16 is provided adjacent to the small diameter part 15 and at the distal end side of the small diameter part 15 in the axial direction. The pedal screw part 16 is located at an end part of the hollow shaft 10 at the distal end side. In the pedal screw part 16, a male screw MS₁₆ is provided at the outer peripheral surface of the hollow shaft 10. The male screw MS₁₆ is used when the pedal P is attached to the hollow shaft 10.

As illustrated in FIG. 3, inside the hollow shaft 10, the interior space IS is defined by the through hole TH.

The through hole TH is divided into a first part TH1, a second part TH2, a third part TH3, and a fourth part TH4 from the proximal end side along the central axis X. A diameter of the through hole TH at the second part TH2 (inner diameter of the hollow shaft 10) is smaller than a diameter of the through hole TH at the first part TH1. A diameter of the through hole TH at the third part TH3 is smaller than the diameter of the through hole TH at the second part TH2. A diameter of the through hole TH at the fourth part TH4 is smaller than the diameter of the through hole TH at the third part TH3.

The first part TH1 is located between the proximal end of the hollow shaft 10 and the vicinity of a central part of the crank screw part 11 in the axial direction. The second part TH2 is located between the vicinity of the central part of the crank screw part 11 in the axial direction and the vicinity of the central part of the bolt head part 12 in the axial direction. The third part TH3 is located between the vicinity of the central part of the bolt head part 12 in the axial direction and a proximal end side end part of the small diameter part 15. The fourth part TH4 is located between the proximal end side end part of the small diameter part 15 and the distal end of the hollow shaft 10.

### Strain Gauge

Strain gauges SG₁₁ to SG₁₄, strain gauges SG₂₁ to SG₂₄, strain gauges SG₃₁ to SG₃₄, and strain gauges SG₄₁ to SG₄₄ are attached to the first strain generating surface 131 to fourth strain generating surface 134 of the gauge attachment part 13 (FIGS. 5(a) to 5(d)). Hereinafter, the strain gauges SG₁₁ to SG₁₄, the strain gauges SG₂₁ to SG₂₄, the strain gauges SG₃₁ to SG₃₄, and the strain gauges SG₄₁ to SG₄₄ may be collectively referred to as a strain gauge SG_{X}.

Each of the strain gauges SG_{X} includes a base member BM formed of a resin film and a resistor RS made of a metal provided on the base member BM.

The resistor RS includes a strain sensing part SS and a pair of connection tabs (connection terminals) T1 and T2 for connecting the strain sensing part SS to the circuit board 20.

In the strain sensing part SS, the resistor RS having a linear shape is folded back in a zigzag manner. In the following description, an extending direction of each of linear parts defined between turning points is referred to as a grid direction (strain sensing direction), and an arrangement direction of the linear parts is referred to as a grid width direction. The grid direction and the grid width direction are orthogonal to each other. Each strain gauge is configured to detect a strain generated in the grid direction.

Each of the strain gauges SG_{X} is provided such that the grid direction of the strain sensing part SS is aligned with the axial direction.

The strain gauge SG₁₁ is provided at the proximal end side and at the circumferential direction negative side of the third strain generating surface 133, and the strain gauge SG₁₂ is provided at the proximal end side and at the circumferential direction positive side of the third strain generating surface 133. The strain gauge SG₁₃ is provided at the proximal end side and at the circumferential direction negative side of the first strain generating surface 131, and the strain gauge SG₁₄ is provided at the proximal end side and at the circumferential direction positive side of the first strain generating surface 131. Each of the strain gauges SG₁₁ to SG₁₄ is provided such that the connection tabs T1 and T2 are located at the distal end side with respect to the sensing part SS.

The strain gauge SG₂₁ is provided at the proximal end side and at the circumferential direction negative side of the second strain generating surface 132, and the strain gauge SG₂₂ is provided at the proximal end side and at the circumferential direction positive side of the second strain generating surface 132. The strain gauge SG₂₃ is provided at the proximal end side and at the circumferential direction negative side of the fourth strain generating surface 134, and the strain gauge SG₂₄ is provided at the proximal end side and at the circumferential direction positive side of the fourth strain generating surface 134. Each of the strain gauges SG₂₁ to SG₂₄ is provided such that the connection tabs T1 and T2 are located at the distal end side with respect to the sensing part SS.

The strain gauge SG₃₁ is provided at the distal end side and at the circumferential direction negative side of the third strain generating surface 133, and the strain gauge SG₃₂ is provided at the distal end side and at the circumferential direction positive side of the third strain generating surface 133. The strain gauge SG₃₃ is provided at the distal end side and at the circumferential direction negative side of the first strain generating surface 131, and the strain gauge SG₃₄ is provided at the distal end side and at the circumferential direction positive side of the first strain generating surface 131. Each of the strain gauges SG₃₁ to SG₃₄ is provided such that the connection tabs T1 and T2 are located at the proximal end side with respect to the sensing part SS.

The strain gauge SG₄₁ is provided at the distal end side and at the circumferential direction negative side of the second strain generating surface 132, and the strain gauge SG₄₂ is provided at the distal end side and at the circumferential direction positive side of the second strain generating surface 132. The strain gauge SG₄₃ is provided at the distal end side and at the circumferential direction negative side of the fourth strain generating surface 134, and the strain gauge SG₄₄ is provided at the distal end side and at the circumferential direction positive side of the fourth strain generating surface 134. Each of the strain gauges SG₄₁ to SG₄₄ is provided such that the connection tabs T1 and T2 are located at the proximal end side with respect to the sensing part SS.

In the first strain generating surface 131, the connection tabs T1 and T2 of the strain gauges SG₁₃ and SG₁₄ and the connection tabs T1 and T2 of the strain gauges SG₃₃ and SG₃₄ are all disposed inside the recessed groove G when viewed in the radial direction. The base members BM of the strain gauges SG₁₃, SG₁₄, SG₃₃, and SG₃₄ are not bonded to the first strain generating surface 131 at a region including the connection tabs T1 and T2 formed, and are disposed inside the recessed groove G when viewed in the radial direction in a state of being separated from the bottom surface Gb of the recessed groove G (FIG. 6). Further, the base members BM are deflected in the radial direction so that the connection tabs T1 and T2 are located inside the recessed groove G when viewed in the circumferential direction. When the strain of the hollow shaft 10 is absorbed by the deflection, the generation of the strain at the connection tabs T1 and T2 is suppressed (details will be described later).

On the other hand, the base members BM of the strain gauges SG₁₃, SG₁₄, SG₃₃, and SG₃₄ are bonded to the first strain generating surface 131 and fixed to the first strain generating surface 131 at a region including the sensing part SS formed. Thus, when a strain is generated at the first strain generating surface 131, a strain corresponding to the strain is also generated at the sensing part SS.

This similarly applies to the second strain generating surface 132 to the fourth strain generating surface 134. The base member BM of the strain gauge attached to each of the strain generating surfaces is not bonded to the second strain generating surface 132 to the fourth strain generating surface 134 at the region including the connection tabs T1 and T2 formed, and is disposed inside the recessed groove G when viewed in the radial direction in a state of being separated from the bottom surface of the recessed groove G. Further, the base members BM are deflected in the radial direction so that the connection tabs T1 and T2 are located inside the recessed groove G when viewed in the circumferential direction. On the other hand, the base member BM of each strain gauge is bonded to each strain generating surface and fixed to each strain generating surface at the region including the sensing part SS formed.

### Circuit Board 20, Power Supply Unit 30, FPC 40

The circuit board 20 is a printed circuit board assembly (PCBA) provided with a processing circuit 21 configured to process an output of each strain gauge, a communication circuit 22 configured to communicate with the outside, and the like. In the present embodiment, the circuit board 20 is disposed at a region of the interior space IS defined by the second part TH2.

The processing circuit 21 includes an amplifier circuit configured to amplify outputs of the strain gauges SG₁₁ to SG₁₄, the strain gauges SG₂₁ to S₂₄, the strain gauges SG₃₁ to SG₃₄, and the strain gauges SG₄₁ to SG₄₄, and/or a calculation circuit or the like configured to perform various calculations by using the outputs of the strain gauges SG₁₁ to SG₁₄, the strain gauges SG₂₁ to S₂₄, the strain gauges SG₃₁ to SG₃₄, and the strain gauges SG₄₁ to SG₄₄.

The communication circuit 22 includes a transmission circuit or the like configured to transmit a processing result of the processing circuit 21 to the outside.

The power supply unit 30 is a unit configured to supply power to the strain gauge SG_{X} and the circuit board 20, and is, for example, a battery. The power supply unit 30 can be any secondary battery. In the present embodiment, the power supply unit 30 is disposed at a region of the interior space IS defined by the second part TH2.

The FPC 40 constitutes four Wheatstone bridge circuits by connecting the strain gauges SG_{X}. The FPC 40 also connects the four Wheatstone bridge circuits to the circuit board 20 and the power supply unit 30.

The FPC 40 has a configuration including a first wiring board 41, a second wiring board 42, a third wiring board 43, and a fourth wiring board 44 being integrally connected.

The first wiring board 41 (FIGS. 2 and 6) extends in the circumferential direction of the hollow shaft 10 and is connected to the connection tabs T1 and T2 of the strain gauges SG₁₁ to SG₁₄, the strain gauges SG₂₁ to SG₂₄, the strain gauges SG₃₁ to SG₃₄, and the strain gauges SG₄₁ to SG₄₄. The first wiring board 41 is provided at the outside of the recessed groove G in the radial direction.

The first wiring board 41 has a band shape with a longitudinal direction aligned with the circumferential direction of the hollow shaft 10. Four slots SL extending through the first wiring board 41 in the thickness direction and extending in the longitudinal direction are provided at a central part of the first wiring board 41 in the width direction (axial direction of the hollow shaft 10). Each of the four slots SL is disposed between the connection tabs of the two strain gauges arranged in the axial direction at any of the first strain generating surface 131 to the fourth strain generating surface 134.

The second wiring board 42 (FIG. 2) extends in the axial direction from a part of the first wiring board 41 in the circumferential direction. The second wiring board 42 is provided at the curved surface CS1.

The third wiring board 43 (FIG. 2) extends in the radial direction from an end part of the second wiring board 42 in the circumferential direction. The third wiring board 43 extends to the interior space IS through the connection hole CH provided at the curved surface CS1 from the curved surface CS1.

The fourth wiring board 44 (FIG. 3) extends in the axial direction from an end part at the inside of the third wiring board 43 in the radial direction. The fourth wiring board 44 extends along the inner peripheral surface 10_{IN} of the hollow shaft 10 from the third wiring board 43, and is connected to the circuit board 20 and the power supply unit 30.

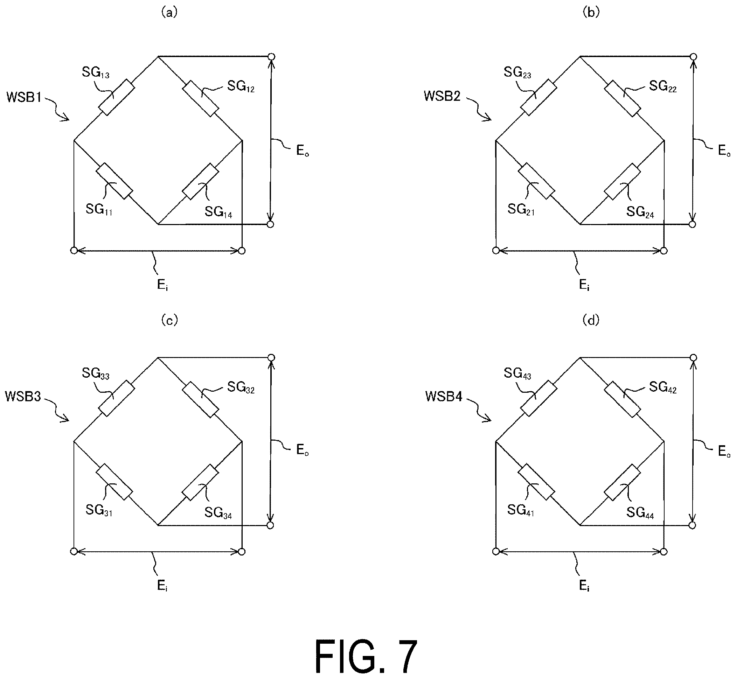

A first Wheatstone bridge WSB1 (FIG. 7(a)) is formed by connecting the strain gauges SG₁₁ to SG₁₄ by the FPC 40. Similarly, a second Wheatstone bridge WSB2 (FIG. 7(b)) is formed by connecting the strain gauges SG₂₁ to SG₂₄ by the FPC 40, a third Wheatstone bridge WSB3 (FIG. 7(c)) is formed by connecting the strain gauges SG₃₁ to SG₃₄ by the FPC 40, and a fourth Wheatstone bridge WSB4 (FIG. 7(d)) is formed by connecting the strain gauges SG₄₁ to SG₄₄ by the FPC 40.

An input voltage Ei is applied to each of the Wheatstone bridges WSB1 to WSB4 by the power supply unit 30. An output voltage Eo of each of the Wheatstone bridges WSB1 to WSB4 is output to the circuit board 20.

The pedal P has a thick plate shape including a through hole (not illustrated) inside and receives insertion of the pedal shaft 100 in the through hole. The pedal P is attached to the pedal shaft 100 by inserting, into the through hole of the pedal P, the pedal shaft 100 including ball bearings (not illustrated) disposed at the vicinity of the proximal end side end part of the medium diameter part 14 and at the small diameter part 15 and attaching a nut (not illustrated) to the pedal screw part 16 to restrict axial direction movement of the pedal P. In addition, the pedal P can be attached to the pedal shaft 100 by any known method.

Next, a method of using the power meter PM will be described.

When using the power meter PM, first, the power meter PM is attached to a crank CR (FIG. 1) of the bicycle or the like. The power meter PM is attached to the crank CR by engaging a tool such as a wrench with the bolt head part 12 of the pedal shaft 100 and screwing the crank screw 11 into a female screw (not illustrated) of the crank CR.

When a user of the bicycle or the like pedals the pedal P in a state of attaching the power meter PM to the crank CR, a load corresponding to a position of the pedal P is applied from the user's leg to the pedal shaft 100. The Wheatstone bridges WSB1 to WSB4 detect a strain generated at the pedal shaft 100 by the load and output the strain to the circuit board 20.

The processing circuit 21 of the circuit board 20 calculates the magnitude, direction, position, and the like of a force (depressing force) of the user of the bike or the like for depressing the pedal P, on the basis of the strain detected via the Wheatstone bridges WSB1 to WSB4. The calculated values are transmitted via the communication circuit 22 to an external device, for example, a display device (not illustrated) attached to a handlebar of the bicycle. The display device displays each value calculated by the pedal meter PM to the user of the bicycle or the like.

The advantageous effects of the pedal shaft 100 and the power meter PM of the present embodiment are summarized below.

In the pedal shaft 100 of the present embodiment, the strain gauge SG_{X} is disposed at the outer peripheral surface 10_{OUT} of the hollow shaft 10, the circuit board 20 is disposed at the interior space IS of the hollow shaft 10, and the FPC 40 connecting the strain gauge SG_{X} to the circuit board 20 extends inside the interior space IS through the connection hole CH.

By providing the strain gauge SG_{X} at the outer peripheral surface 10_{OUT} being a position generating the largest strain at the hollow shaft 10, the detection accuracy of the strain gauge SG_{X} can be enhanced. In addition, although the signal output by each of the strain gauges SG_{X} is weak and is easily affected by noise from the outside, by disposing the circuit board 20 and the FPC 40 at the interior space IS of the hollow shaft 10, the noise from the outside is blocked by the hollow shaft 10, and signal transmission by the FPC 40 and various kinds of processing by the circuit board 20 can be favorably performed. From these points, the pedal shaft 100 of the present embodiment can perform detection of the strain and the like by the circuit board 20 with high accuracy.

In the pedal shaft 100 of the present embodiment, the circuit board 20 and the FPC 40 are disposed at the interior space IS of the hollow shaft 10 made of a metal, and thus the circuit board 20 and the FPC 40 can be well protected from external moisture, dust, and the like.

The pedal shaft 100 of the present embodiment is configured by using the hollow shaft 10 made of a metal and including the interior space IS, and thus the pedal shaft 100 is lightweight while having sufficient strength.

In the pedal shaft 100 of the present embodiment, the first strain generating surface 131 to the fourth strain generating surface 134 being flat surfaces orthogonal to the radial direction are provided at the outer peripheral surface 10_{OUT} of the hollow shaft 10 at equal intervals in the circumferential direction. The strain gauge SG_{X} is attached to the first strain generating surface 131 to the fourth strain generating surface 134. As described above, by providing the strain gauge SG_{X} at the flat surface parallel to the axial direction, each of the strain gauges SG_{X} can detect the strain generated in the axial direction of the hollow shaft 10 with high accuracy, and the load of the calculation processing on the circuit board 20 is reduced. In addition, by providing the plurality of strain generating surfaces having the same shape at equal intervals in the circumferential direction (that is, in rotational symmetry), the strains generated at the hollow shaft 10 are equalized in the circumferential direction, and the calculation of the magnitude of the depressing force or the like at the circuit board 20 can be performed with higher accuracy.

In the pedal shaft 100 of the present embodiment, the recessed groove G is provided at the gauge attachment part 13 of the hollow shaft 10. The connection tabs T1 and T2 of each of the strain gauges SG_{X} are disposed inside the recessed part G when viewed in the radial direction so as to be spaced apart from the bottom surface of the recessed part G, and are not bonded to the hollow shaft 10. Further, the base members BM are deflected in the radial direction so that the connection tabs T1 and T2 are located inside the recessed groove G when viewed in the circumferential direction. Thus, even when a strain is generated at the hollow shaft 10, the connection tabs T1 and T2 only move in the radial direction, and a strain is not generated in the connection tabs T1 and T2. Thus, the generation of the strain at the connection tabs T1 and T2 and further deterioration of a connection state between the connection tabs T1 and T2 and the FPC 40 possibly generated by the strain of the connection tabs T1 and T2 can be prevented.

In the pedal shaft 100 of the present embodiment, the slot SL is provided at the first wiring board 41 of the FPC 40. Thus, the influence of the strain generated at the connection tabs T1 and T2 of the strain gauge disposed at the one side of the slot SL in the axial direction can be reduced from being exerted on the connection tabs T1 and T2 of the strain gauge disposed at the other side of the slot SL in the axial direction. That is, even when there is a difference in the amount of strain (amount of displacement) of the hollow shaft 10 or the strain gauge between the one side and the other side of the slot SL in the axial direction, the influence thereof is absorbed by the slot SL. Thus, the generation of the strain at the connection tabs T1, T2 and the like of the strain gauge at the other side of the slot SL in the axial direction due to the strain generated at the one side of the slot SL in the axial direction is suppressed.

In the pedal shaft 100 of the present embodiment, the four connection holes CH having the same shape are provided at the gauge attachment part 13 of the hollow shaft 10 at equal intervals in the circumferential direction. As described above, although only one connection hole CH for passing the FPC 40 is sufficient, by providing a plurality of the connection holes CH having the same shape rotationally symmetrically in the circumferential direction, the strains generated at the hollow shaft 10 are equalized in the circumferential direction, and the calculation of the magnitude of the depressing force or the like at the circuit board 20 can be performed with higher accuracy.

In the pedal shaft 100 of this embodiment, the grid direction of each of the strain gauges SG_{X} attached to the gauge attachment part 13 of the hollow shaft 10 is aligned with the axial direction of the hollow shaft 10. Thus, each of the Wheatstone bridges WSB1 to WSB4 can be formed as a full bridge circuit, and highly accurate detection can be performed.

In the pedal shaft 100 of the present embodiment, the processing circuit 20 and the power supply unit 30 are disposed at the interior space IS of the hollow shaft 10. Thus, the power meter PM including the pedal shaft 100 is functionally completed, and when the power meter PM is attached to the crank CR of the bicycle or the like, it is not necessary to provide wiring or the like across the power meter PM and the crank CR. Thus, the power meter PM including the pedal shaft 100 of the present embodiment is easy to handle, and can be attached to and detached from the crank CR with less labor.

### Modifications

In the pedal shaft 100 of the embodiment described above, the following modified aspects can also be used.

In the pedal shaft 100 of the embodiment described above, the grid directions of the sensing parts SS of all the sixteen strain gauges SG_{X} attached to the hollow shaft 10 is aligned with the axial direction of the hollow shaft 10. However, the embodiment is not limited to this, and the grid directions of some of the sensing parts may be aligned with the axial direction of the hollow shaft 10, and the grid directions of some other sensing parts may be aligned with the circumferential direction of the hollow shaft 10.

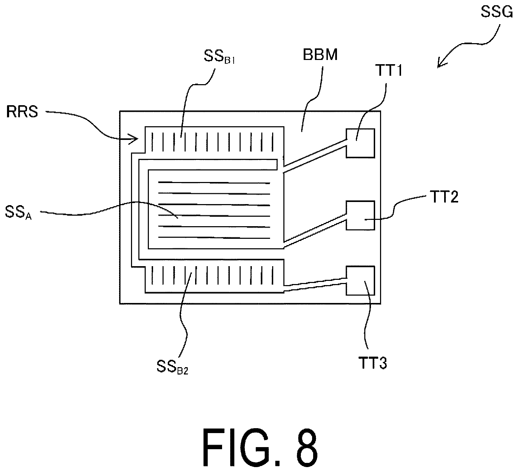

Specifically, for example, a strain gauge SSG illustrated in FIG. 8 is used. The strain gauge SSG includes a base member BBM formed of a resin film and a resistor RRS made of a metal provided at the base member BBM. The resistor RRS includes strain sensing parts SS_{A}, SS_{B1}, and SS_{B2}, and connection tabs TT1, TT2, and TT3 for connecting the strain sensing parts SS_{A}, SS_{B1}, and SS_{B2} to the circuit board 20.

In the strain sensing parts SS_{A}, SS_{B1}, and SS_{B2}, the resistor RRS having a linear shape is folded back in a zigzag manner. The grid direction of the strain sensing part SS_{A} and the grid directions of the strain sensing parts SS_{B1} and SS_{B2} are orthogonal to each other. The strain sensing parts SS_{B1} and SS_{B2} are disposed sandwiching the strain sensing part SS_{A} in a direction (grid width direction) orthogonal to the grid direction of the strain sensing part SS_{A}.

As illustrated in FIGS. 9(a) to 9(d), two of eight strain gauges SSG are attached to each of the first strain generating surface 131 to the fourth strain generating surface 134. Each of the eight strain gauges SSG is attached such that the grid direction of the strain sensing part SS_{A} is aligned with the axial direction of the hollow shaft 10, and the grid directions of the strain sensing parts SS_{B1} and SS_{B2} is aligned with the circumferential direction of the hollow shaft 10.

The strain gauges SSG attached to the proximal end sides of the first strain generating surface 131 to the fourth strain generating surface 134 are attached such that the connection tabs TT1 to TT3 are located at the distal end sides with respect to the strain sensing parts SS_{A}, SS_{B1}, and SS_{B2}. The strain gauges SSG attached to the distal end sides of the first strain generating surface 131 to the fourth strain generating surface 134 are attached such that the connection tabs TT1 to TT3 are located at the proximal end sides with respect to the strain sensing parts SS_{A}, SS_{B1}, and SS_{B2}. The connection tabs TT1 to TT3 of each of the eight strain gauges SSG are disposed inside the recessed groove G when viewed in the radial direction.

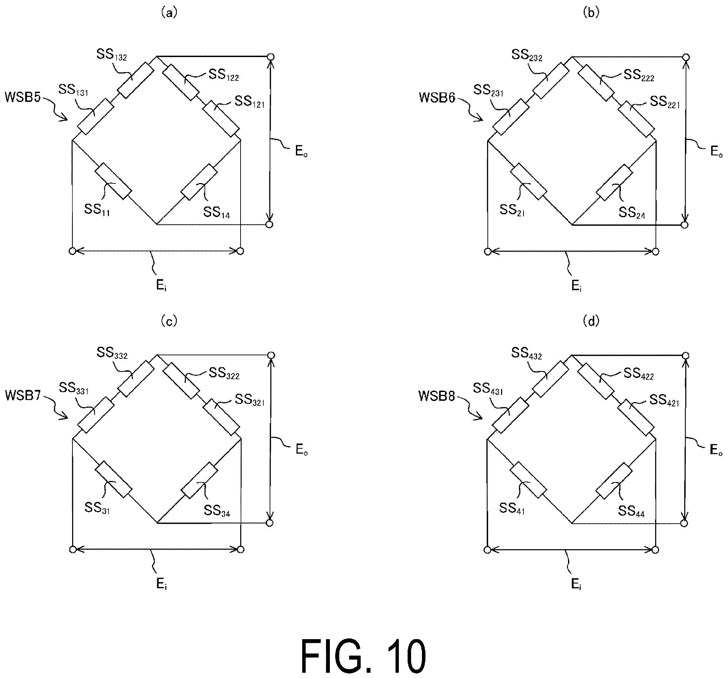

The strain sensing parts SS_{A}, SS_{B1}, and SS_{B2} of the strain gauge SSG attached to the proximal end side of the third strain generating surface 133 are referred to as strain sensing parts SS₁₁, SS₁₃₁, and SS₁₃₂, respectively, and the strain sensing parts SS_{A}, SS_{B1}, and SS_{B2} of the strain gauge SSG attached to the proximal end side of the first strain generating surface 131 are referred to as strain sensing parts SS₁₄, SS₁₂₁, and SS₁₂₂, respectively. At this time, these strain sensing parts can be connected by the FPC 40 to form a Wheatstone bridge WSB5 illustrated in FIG. 10(a).

The strain sensing parts SS_{A}, SS_{B1}, and SS_{B2} of the strain gauge SSG attached to the proximal end side of the second strain generating surface 132 are referred to as strain sensing parts SS₂₁, SS₂₃₁, and SS₂₃₂, respectively, and the strain sensing parts SS_{A}, SS_{B1}, and SS_{B2} of the strain gauge SSG attached to the proximal end side of the fourth strain generating surface 134 are referred to as strain sensing parts SS₂₄, SS₂₂₁, and SS₂₂₂, respectively. At this time, these strain sensing parts can be connected by the FPC 40 to form a Wheatstone bridge WSB6 illustrated in FIG. 10(b).

The strain sensing parts SS_{A}, SS_{B1}, and SS_{B2} of the strain gauge SSG attached to the distal end side of the third strain generating surface 133 are referred to as strain sensing parts SS₃₁, SS₃₃₁, and SS₃₃₂, respectively, and the strain sensing parts SS_{A}, SS_{B1}, and SS_{B2} of the strain gauge SSG attached to the distal end side of the first strain generating surface 131 are referred to as strain sensing parts SS₃₄, SS₃₂₁, and SS₃₂₂, respectively. At this time, these strain sensing parts can be connected by the FPC 40 to form a Wheatstone bridge WSB7 illustrated in FIG. 10(c).

The strain sensing parts SS_{A}, SS_{B1}, and SS_{B2} of the strain gauge SSG attached to the distal end side of the second strain generating surface 132 are referred to as strain sensing parts SS₄₁, SS₄₃₁, and SS₄₃₂, respectively, and the strain sensing parts SS_{A}, SS_{B1}, and SS_{B2} of the strain gauge SSG attached to the distal end side of the fourth strain generating surface 134 are referred to as strain sensing parts SS₄₄, SS₄₂₁, and SS₄₂₂, respectively. At this time, these strain sensing parts can be connected by the FPC 40 to form a Wheatstone bridge WSB8 illustrated in FIG. 10(d).

As described above, by using the strain gauge SSG with the half bridge being formed, the deterioration of temperature characteristics due to an internal wiring length can be reduced. More specifically, all or most of the wiring line constituting the Wheatstone bridges WSB5 to WSB8 can be formed at the strain gauge SSG instead of the FPC 40, and thus a change in temperature characteristics due to a resistance difference between a wiring pattern (for example, a copper pattern) of the strain gauge and a wiring pattern of the FPC 40 is suppressed. Thus, a detection error caused by a temperature change can be suppressed.

In addition, in the present modification, the strain gauge SSG with a plurality of strain sensing parts being formed at a single base member BBM is used. Thus, by disposing the strain gauges in a smaller region, the sizes of the first strain generating surface 131 to the fourth strain generating surface 134 and further the pedal shaft 100 can be reduced. In addition, the strain sensing parts are connected to each other at the strain gauge SSG, and thus the number of connection tabs necessary for forming one Wheatstone bridge can be reduced to six. Since the number of connection tabs necessary for forming the Wheatstone bridge is reduced, the size of the connection tabs can be increased to improve the workability of the electrical connection with the FPC 40.

The strain gauge SSG can also be regarded as a structure obtained by integrally combining two separate strain gauges, that is, the strain gauge including the strain sensing part SS_{A} and the strain gauge including the strain sensing parts SS_{B1} and SS_{B2}. Instead of the strain gauge SSG, two separate strain gauges, that is, the strain gauge including the strain sensing part SS_{A} and the strain gauge including the strain sensing parts SS_{B1} and SS_{B2} may be used.

In the pedal shaft 100 of the embodiment described above, the first strain generating surface 131 to the fourth strain generating surface 134 are provided at the gauge attachment part 13 of the hollow shaft 10, but the embodiment is not limited to this. Any number of flat strain generating surfaces orthogonal to the radial direction is provided at the gauge attachment part 13. When a plurality of the strain generating surfaces are included, by forming the strain generating surfaces in the same shape and disposing the strain generating surfaces at equal intervals in the circumferential direction, the strains generated in the hollow shaft 10 can be made uniform in the circumferential direction. The strain gauge may be attached to the outer peripheral surface 10_{OUT} (for example, a cylindrical surface) of the hollow shaft 10 without providing the flat strain generating surface orthogonal to the radial direction. In this case, the outer peripheral surface 10_{OUT} is a substantial strain generating surface.

In the pedal shaft 100 of the embodiment described above, the hollow shaft 10 includes the through hole TH, and the interior space IS is defined inside the hollow shaft 10 by the through hole TH, but the embodiment is not limited to this. Instead of the through hole TH, the hollow shaft 10 may include a central hole (recessed hole extending in the axial direction) having a configuration with the through hole TH being closed at the end part at the proximal end side and/or the end part at the distal end side. In this case, the interior space IS is defined by the central hole.

In the present invention, the "hollow shaft" means any member having a shaft shape and including a space inside. Further, in the present invention, the "interior space of the hollow shaft" means any space defined inside the hollow shaft. The space may be in communication with the outside of the hollow shaft or may be a sealed space defined inside the hollow shaft.

In the pedal shaft 100 of the embodiment described above, the hollow shaft 10 has a substantially cylindrical shape, but the embodiment is not limited to this. The shape of a cross section taken along a plane orthogonal to the axial direction of the hollow shaft 10 is any shape.

In the pedal shaft 100 of the embodiment described above, the sixteen strain gauges SG_{X} are attached to the hollow shaft 10, but the embodiment is not limited to this. Any number of strain gauges is attached to the hollow shaft 10.

In the pedal shaft 100 of the embodiment described above, the four connection holes CH each being the long hole with the longitudinal direction aligned with the axial direction are disposed in the hollow shaft 10 at equal intervals in the circumferential direction, but the embodiment is not limited to this. The connection holes CH has any shape, number, and arrangement.

Specifically, for example, only a single connection hole CH necessary for extending the FPC 40 from the outer peripheral surface 10_{OUT} to the interior space IS may be provided. In addition, the shape of the cross section of each of the connection holes CH taken along a plane orthogonal to the radial direction may be circular, quadrangular, or the like.

When the plurality of the connection holes CH are provided at equal intervals in the circumferential direction, the shapes of the cross sections of the plurality of connection holes CH taken along a plane orthogonal to the radial direction need not necessarily be the same. Also in this case, by providing the connection holes CH at equal intervals in the circumferential direction, the strains generated in the hollow shaft 10 can be made uniform in the circumferential direction.

In the pedal shaft 100 of the embodiment described above, the connection between the sixteen strain gauges SG_{X} and the like and the circuit board 20 is made by the FPC 40, but the embodiment is not limited to this. The connection between the sixteen strain gauges SG_{X} and the like and the circuit board 20 may be made by any wiring structure such as a lead wire. The slot SL of the first wiring board 41 of the FPC 40 may extend in any direction intersecting the axial direction of the hollow shaft 10.

In the pedal shaft 100 of the embodiment described above, an adhesive having a small adhesive force may be disposed at the recessed groove G (that is, between the base member BM and the bottom surface Gb) of the gauge attachment part 13 of the hollow shaft 10. The "adhesive having a small adhesive force" means an adhesive having an adhesive force weaker than an adhesive force of an adhesive used at the region including the sensing part SS and having such an adhesive force that when a strain is generated at the hollow shaft 10, a strain corresponding to the strain is not generated at the connection tabs T1 and T2. An aspect with the base member BM being bonded to the hollow shaft 10 by the adhesive having the small adhesive force is also included in an aspect with the strain gauge being not fixed to the hollow shaft 10. Further, an aspect with the connection tabs T1 and T2 of the base member BM being not bonded to the hollow shaft 10 without providing the recessed groove G, or an aspect with the connection tabs T1 and T2 being bonded by the adhesive having the small adhesive force may be adopted.

With such a structure as well, the generation of the strain at the connection tabs T1 and T2 corresponding to the strain at the hollow shaft 10 can be suppressed, and further damage to the connection between the connection tabs T1 and T2 and the FPC 40 can be suppressed.

As long as the features of the present invention are maintained, the present invention is not limited to the embodiment described above, and other forms considered within the scope of the technical concept of the present invention are also included within the scope of the present invention.

### Reference Signs List

10 Hollow shaft; 11 Crank screw part; 12 Bolt head part; 13 Gauge attachment part; 14 Medium diameter part; 15 Small diameter part; 16 Pedal screw part; 20 Circuit board; 30 Power supply unit; 40 FPC; 100 Pedal shaft; PM Pedal meter; SG_{X}, SSG Strain gauge

## Claims

1. A pedal shaft for a pedal-type power meter, the pedal shaft comprising:
a hollow shaft configured such that a pedal is rotatably attached to the hollow shaft;
a strain gauge attached to an outer peripheral surface of the hollow shaft; and
a processing circuit disposed at an interior space of the hollow shaft and configured to process an output from the strain gauge.

2. The pedal shaft according to claim 1, wherein
a connection hole connecting the outer peripheral surface and the interior space with each other is provided at the hollow shaft, and
a wiring line connecting the strain gauge and the processing circuit with each other is disposed at the connection hole and the interior space.

3. The pedal shaft according to claim 2, wherein
a plurality of the connection holes are provided at equal intervals in a circumferential direction of the hollow shaft.

4. The pedal shaft according to claim 2 or 3, wherein
the connection hole is a long hole with a longitudinal direction aligned with an axial direction of the hollow shaft.

5. The pedal shaft according to any one of claims 2 to 4, wherein
the strain gauge includes two strain gauges arranged in an axial direction of the hollow shaft,
the wiring line includes a flexible printed wiring board connected to the two strain gauges, and
the flexible printed wiring board includes a slot extending in a direction intersecting the axial direction at a region located between the two strain gauges.

6. The pedal shaft according to any one of claims 1 to 5, wherein
the hollow shaft has a cylindrical shape, and
the interior space is defined by a recessed hole or a through hole extending in an axial direction of the hollow shaft.

7. The pedal shaft according to any one of claims 1 to 6, wherein
a plurality of flat surfaces each extending in a plane orthogonal to a radial direction of the hollow shaft are provided at the outer peripheral surface of the hollow shaft,
the plurality of flat surfaces are provided at equal intervals in a circumferential direction of the hollow shaft, and
the strain gauge is attached to each of the plurality of flat surfaces.

8. The pedal shaft according to claim 7,
wherein the plurality of flat surfaces are four flat surfaces.

9. The pedal shaft according to any one of claims 1 to 8, wherein
the strain gauge includes
a strain sensing part,
a connection terminal configured to connect the strain sensing part to the processing circuit, and
a base member formed with the strain sensing part and the connection terminal, and
the base member is fixed to the hollow shaft at a region including the strain sensing part formed and is not fixed to the hollow shaft at a region including the connection terminal formed.

10. The pedal shaft according to claim 9, wherein
a recessed groove is provided at the outer peripheral surface of the hollow shaft, and
the connection terminal of the strain gauge is located inside the recessed groove when viewed in a radial direction of the hollow shaft.

11. The pedal shaft according to any one of claims 1 to 10, wherein
a screw part configured to attach the pedal shaft to a crank is provided at one end part of the hollow shaft, and
a screw part configured to attach the pedal to the pedal shaft is provided at another end part of the hollow part.

12. The pedal shaft according to any one of claims 1 to 11, wherein
the strain gauge includes a plurality of gauges each including a strain sensing part, and
a strain sensing direction of the strain sensing part of each of the plurality of strain gauges is aligned with an axial direction of the hollow shaft.

13. The pedal shaft according to any one of claims 1 to 11, wherein
the strain gauge includes a plurality of gauges each including a strain sensing part, and
the plurality of gauges include a first gauge group with a strain sensing direction of each strain sensing part aligned with an axial direction of the hollow shaft, and a second gauge group with a strain sensing direction of each strain sensing part aligned with a circumferential direction of the hollow shaft.
